(19) Europäisches Patentamt
European Patent Office
Office européen des brevets

(11) Veröffentlichungsnummer: **0 306 449 B1**

# (12) EUROPÄISCHE PATENTSCHRIFT

(45) Veröffentlichungstag der Patentschrift: **02.03.94**

(51) Int. Cl.[5]: **C08F 8/14**, C04B 24/24

(21) Anmeldenummer: **88810573.1**

(22) Anmeldetag: **22.08.88**

Die Akte enthält technische Angaben, die nach dem Eingang der Anmeldung eingereicht wurden und die nicht in dieser Patentschrift enthalten sind.

## (54) Copolymere von Styrol und Maleinsäurehalbester sowie ihre Verwendung als Zementverflüssiger.

(30) Priorität: **28.08.87 DE 3728786**
**05.01.88 DE 3800091**

(43) Veröffentlichungstag der Anmeldung:
**08.03.89 Patentblatt 89/10**

(45) Bekanntmachung des Hinweises auf die Patenterteilung:
**02.03.94 Patentblatt 94/09**

(84) Benannte Vertragsstaaten:
**AT BE CH DE ES FR GB IT LI NL SE**

(56) Entgegenhaltungen:
**DE-A- 2 312 616**
**GB-A- 1 171 387**
**US-A- 3 207 718**
**US-A- 3 544 344**
**US-A- 3 563 930**

(73) Patentinhaber: **SANDOZ AG**
**Lichtstrasse 35**
**CH-4002 Basel(CH)**
(84) Benannte Vertragsstaaten:
**BE CH ES FR GB IT LI NL SE**

(73) Patentinhaber: **SANDOZ-PATENT-GMBH**
**Humboldtstrasse 3**
**D-79539 Lörrach(DE)**
(84) Benannte Vertragsstaaten:
**DE**

(73) Patentinhaber: **SANDOZ-ERFINDUNGEN Verwaltungsgesellschaft m.b.H.**
**Brunner Strasse 59**
**A-1230 Wien(AT)**
(84) Benannte Vertragsstaaten:
**AT**

(72) Erfinder: **Valenti, Salvatore**
**Im Rehwechsel 37**
**CH-4102 Binningen(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft neue Copolymere von Styrol und Maleinsäurehalbester sowie ihre Verwendung als Zementverflüssiger.

Solche Copolymere sind z.B. aus den US-PS 3392155, 3544344 und 3563930 sowie aus der DE-PS 2312616 bekannt. In allen diesen Patentschriften werden niedermolekulare Umsetzungsprodukte von Styrol-Maleinsäureanhydrid-Copolymeren mit Polyäthylenglykoläthern beschrieben. "Niedermolekular" bedeutet in diesem Zusammenhang, dass die Styrol-Maleinsäureanhydrid-Copolymere,welche als Ausgangsprodukte eingesetzt werden, ein Molekulargewicht von 1600-1800 (siehe US-PS 3544344 und 3563930, in der anderen US-PS und der DE-PS ist nur die Viskosität angegeben) und die Polyäthylenglykoläther meistens ein Molekulargewicht zwischen 250 und 1200 aufweisen. Im allgemeinen sind die Produkte nur teilweise verestert, sodass das Molekulargewicht der Endprodukte normalerweise zwischen 2000 und 4000 liegt. Je nach Verhältnis Styrol-Maleinsäureanhydrid enthalten diese Copolymere eine unterschiedliche Anzahl Monomereinheiten. Bei einem 1:1 Verhältnis entspricht das Molekulargewicht einer Anzahl von 8-9 Monomereinheiten.

In der US-PS 3563930 ist die Verwendung dieser Copolymere als Luft einbringendes Zusatzmittel für Zementmischungen offenbart. Dort wird auch festgehalten, dass die Druckfestigkeit nicht beeinflusst wird (siehe Spalte 1, Zeilen 57-58), d.h. die Copolymere weisen keine Zement verflüssigenden Eigenschaften auf.

Andererseits sind aus der GB-PS 963943 und der US-PS 3399109 höhermolekulare Umsetzungsprodukte von Styrol-Maleinsäureanhydrid-Copolymeren mit Polyäthylenglykoläthern bekannt, deren Molekulargewicht jedoch nur anhand von Viskositätsangaben abschätzbar ist. Ausserdem bestehen diese Copolymere vorwiegend aus Styroleinheiten.

Schliesslich sind aus der DE-OS 3514878 und der WO 86/04338 Copolymere von Styrol und Maleinsäureester bekannt, die möglichst keine freien Säuregruppen mehr aufweisen, damit sie öllöslich sind.

Gegenstand der Erfindung sind dagegen wasserlösliche Copolymere von Styrol und Maleinsäurehalbester mit einem mittleren Molekulargewicht, die als Zementverflüssiger dienen können.

Insbesondere betrifft die Erfindung neue Copolymere von Styrol und Maleinsäurehalbester mit einem Molekulargewicht von 9.000 bis 100.000 und Anteilen an Styrol- und Maleinsäure-(anhydrid oder -halbester)-Einheiten zwischen 3:1 und 1:3 als freie Säuren oder in Salzform, in denen die Maleinsäurehalbester-Einheiten der Formel

```
- CH - CH -
  |    |
  C=O  C=O
  |    |
  OH   O
       |
       (R-O)m-R1
```

entsprechen,
worin

- R einen $C_{2-6}$-Alkylenrest,
- $R_1$ eine $C_{1-20}$Alkyl-, $C_{6-9}$Cycloalkyl- oder Phenylgruppe
- m eine Zahl von 1 bis 100 bedeuten,

diese Einheiten n = 10 bis 100 mal im Copolymer auftreten, das Verhältnis der Anzahl Maleinsäurehalbester zu den Maleinsäureanhydrid-Einheiten von 3:1 bis 100:1 beträgt und die Summe m + n = 15-100.

Die erfindungsgemässen Copolymere weisen bevorzugt ein Molekulargewicht von 12.000 bis 36.000 auf und bestehen bevorzugt aus etwa gleichen Anteilen Styrol- und Maleinsäure(anhydrid oder -halbester)-Einheiten, d.h. das Verhältnis liegt bevorzugt bei 1:1. Die am meisten bevorzugten Copolymere enthalten alternierend Styrol- und Maleinsäure(anhydrid oder -halbester)-Einheiten und weisen ein Molekulargewicht von etwa 18.000 auf.

In der Formel I kann jede Alkyl- oder Alkylengruppe linear oder verzweigt sein und ist jedes R unabhängig voneinander bevorzugt eine $C_{2-3}$Alkylengruppe, weiter bevorzugt sind alle R gleich und eine Aethylengruppe. Jedes $R_1$ ist unabhängig voneinander bevorzugt Methyl oder Aethyl, weiter bevorzugt sind alle $R_1$ gleich und Methyl. m ist bevorzugt eine Zahl von 7 bis 20, weiter bevorzugt 11-12. Um das gewünschte Molekulargewicht zu erreichen, müssen die erfindungsgemässen Copolymere mindestens 10, bevorzugt 18 bis 40 Styrol- und Maleinsäure-(anhydrid oder -halbester)-Einheiten aufweisen, d.h. n ist

bevorzugt eine Zahl von 18 bis 40. Die Summe m + n ist daher bevorzugt eine Zahl von 25 bis 60. Die Säuregruppen der Copolymere können als freie Säure oder in Salzform vorliegen. Als Salze kommen Alkali-, Erdalkali- oder (Hydroxyalkyl- oder Alkyl)Ammoniumsalze in Betracht. Bevorzugt liegen die Copolymere als Alkali-, insbesondere als Natriumsalze vor.

Copolymere gemäss der Erfindung können nach allgemein bekannten Methoden hergestellt werden und zwar insbesondere durch Umsetzung von Copolymeren von Styrol und Maleinsäureanhydrid, worin die Styrol- und Maleinsäureanhydrid-Einheiten n = 10 bis 100 mal auftreten, mit Polyalkylenglykoläthern der Formel

$R_1$ - O -(R-O)$_m$ - H

und gewünschtenfalls Umsetzung der erhaltenen Copolymere mit einer Alkali- oder Erdalkalibase, mit Ammoniak oder mit einer (Hydroxy)alkylaminoverbindung. Je nach eingesetzten Mengen ist die Umsetzung der Maleinsäureanhydridgruppen mit den Polyalkylenglykoläthern mehr oder weniger vollständig, d.h. mehr oder weniger Anhydridgruppen verbleiben in den Endprodukten. Mit äquimolaren Mengen findet theoretisch eine 100%ige Umsetzung zu Halbestern statt, die aber praktisch nie erreicht wird. Bevorzugt werden für die erfindungsgemässen Copolymere so viele Anhydridgruppen wie möglich umgesetzt, d.h. das Verhältnis der Anzahl Maleinsäurehalbester zu den Maleinsäureanhydrid-Einheiten soll so nahe wie möglich bei 100:1 liegen, was durch Bestimmung der Säurezahl im Endprodukt überprüft werden kann.

Copolymere von Styrol und Maleinsäureanhydrid werden durch Copolymerisation von Styrol und Maleinsäureanhydrid hergestellt und sind wohl bekannte Produkte (siehe z.B. C.E. Schildknecht, "Vinyl and related Polymers", John Wiley ans Sons, Inc., New York, 1952).

Polyalkylenglykoläther der obigen Formel sind ebenfalls bekannte Produkte und werden durch Addition von Alkylenoxiden, insbesondere von Aethylenoxiden an Alkyl- oder Cycloalkylalkohole oder Phenole hergestellt.

Die neuen Copolymere von Styrol und Maleinsäurehalbester sind ausgezeichnete oberflächenaktive Verbindungen und sind als Dispergatoren für organische und anorganische Materialien geeignet. Insbesondere können sie als Zusatzmittel für Zementmischungen verwendet werden.

Solche Zementmischungen sind z.B. Mörtel und Beton, wobei das hydraulische Bindemittel Portlandzement, Aluminiumzement oder Zementgemische, wie z.B. Pozzolanzement, Schlackzement oder dgl., jedoch bevorzugt Portlandzement ist. Die erfindungsgemässen Copolymere werden in Mengen von 0,01 bis 10%, bevorzugt in Mengen von 0,1 bis 3%, bezogen auf das Gewicht des Zementes eingesetzt und haben dann die Eigenschaft, die Fliesseigenschaften der Zementmischungen günstig zu beeinflussen. Sie sind daher ausgezeichnete Superplasticizer, ohne dabei die gleichen Luft einbringenden Eigenschaften von vergleichbaren Copolymeren mit niedrigerem Molekulargewicht aufzuweisen. Die erfindungsgemäss verflüssigten Zementmischungen können im übrigen weitere bekannte Zusatzmittel, wie z.B. Beschleuniger oder Verzögerer, Frostschutzmittel, Pigmente, usw. enthalten.

In den folgenden Beispielen sind alle Angaben von Teilen, Verhältnissen und Prozenten als Gewichtsangaben zu verstehen und sind die Temperaturen in Celsiusgraden angegeben.

## Herstellungsbeispiel 1

49 Teile Maleinsäureanhydrid und 2,5 Teile n-Dodecylmercaptan werden in 200 Teilen Methylisobutylketon gelöst und unter Stickstoff und Rühren auf 110° erwärmt. Bei dieser Temperatur wird innerhalb einer Stunde eine Lösung von 1 Teil Azodiisobutyronitril in 52 Teilen Styrol langsam zugetropft. Die Reaktion ist leicht exotherm. Nach der Zugabe wird das Reaktionsgemisch unter Vakuum vom Lösungsmittel befreit (Innentemperatur 50-55°) und man erhält ein blassgelbes Produkt, welches etwa 25 Einheiten Styrol und Maleinsäureanhydrid aufweist und ein Molekulargewicht von etwa 5000 hat (viskosimetrische Bestimmung: die "intrinsic viscosity" bei 25° in Aceton beträgt 0,05 $cm^3/g$).

35 Teile dieses Produktes und 97 Teile des Produktes mit der Formel

$CH_3$ -$(OCH_2CH_2)_{12}$ - OH

werden unter Stickstoff bei 180-190° während 2 Stunden gerührt, wobei ein braunes Oel entsteht mit einer Säurezahl von 75-80, was einer vollständigen Umsetzung der Anhydridgruppen zu Halbestergruppen entspricht. Das Molekulargewicht des Produktes ist ca. 18.000 (viskosimetrische Bestimmung: die "intrinsic viscosity" bei 25° in Aceton beträgt 0,15 $cm^3/g$).

Das Oel wird nun in 306 Teilen Wasser aufgenommen und die erhaltene Lösung wird mit Natronlauge oder mit Triäthanolamin auf pH 6-7 eingestellt. Diese Lösung enthält ein Polymer mit etwa 25 Struktureinheiten

der Formel

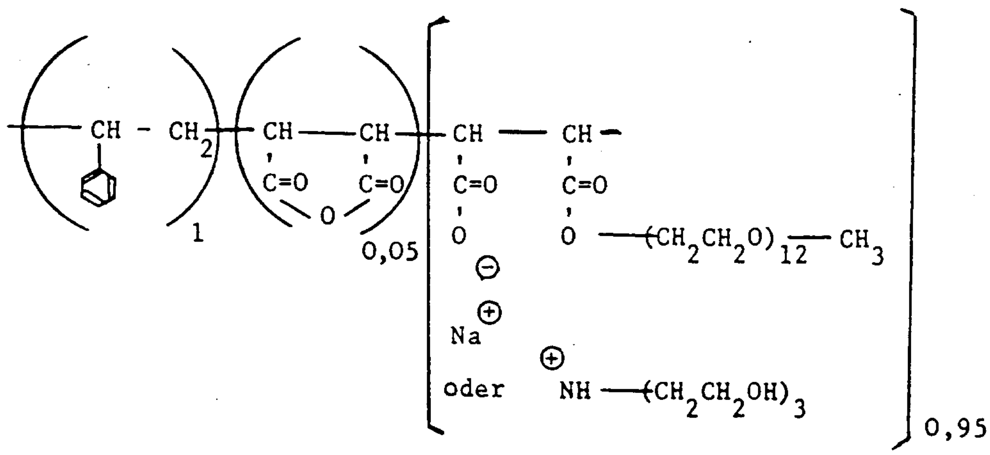

Ein vergleichbares Produkt wird nach dem folgenden Verfahren erhalten: 39,2 Teile Maleinsäureanhydrid und 4,04 Teile Dodecylmercaptan werden in 160 Teilen Methylisobutylketon unter Rühren gelöst. Nach Evakuieren und mit Stickstoff entlasten wird unter Stickstoff und unter Rühren auf 110° Innentemperatur aufgeheizt, worauf eine Lösung von 0,8 Teilen Azodiisobutyronitril in 41,6 Teilen Styrol zugetropft wird. Es tritt eine exotherme Reaktion ein. Während der Zugabe wird die Temperatur bei 110° gehalten und anschliessend wird während 2,5 Stunden bei 110° weiter gerührt, dann die Heizung abgestellt und noch 30 Minuten weiter gerührt. Nach Abkühlung auf 40-50° werden 200 Teile Polyglykol M 500 (ein Polyäthylenglykoläther der Hoechst AG mit einem Molekulargewicht von 500, d.h. durchschnittlich 11,8 Aethylenoxidgruppen) zugesetzt, auf 110° erwärmt und 3 Stunden bei dieser Temperatur weiter gerührt. Es entsteht eine braune klare Lösung, die man auf Raumtemperatur abkühlen lässt, worauf bei einer Innentemperatur von höchstens 50-55° unter Rühren und unter Vakuum das Methylisobutylketon herausdistilliert wird. Nach ca. 2 Stunden können so 144 Teile Methylisobutylketon zurückgewonnen werden. Das erhaltene Oel (ca. 281 Teile) lässt man auf 40-50° abkühlen, dann wird eine Lösung von 33 Teilen Natriumhydroxid (30%ige Lösung) in 598 Teilen destilliertem Wasser zugetropft. Das Oel geht dabei rasch in Lösung und nach 10 Minuten Rühren bei Raumtemperatur wird der pH-Wert auf 6-7 eingestellt. Nach Zusatz von 9,9 Teilen Tributylphosphat als Schaumverhinderer und einer Stunde Nachrühren erhält man 940,5 Teile einer 32%igen Lösung mit einer Dichte von 1,05 und einer Viskosität von 22,5 mPa.sek. bei 25°.

## Herstellungsbeispiele 2-14

Nach dem Verfahren von Beispiel 1 erhält man unter Einsatz der in Tabelle 1 angegebenen Ausgangsprodukte, welche den Formeln V, VI und VII entsprechen

$CH_3\text{--}(OCH_2CH_2)_4\text{--}OH$ V

$CH_3\text{--}(OCH_2CH_2)_7\text{--}OH$ VI

$CH_3\text{--}(OCH_2CH_2)_{18}\text{--}OH$ VII

und durch Anlagerung von Aethylenoxid in passenden Mengen an Diäthylenglykolmonomethyläther hergestellt werden können, die ebenfalls in Tabelle 1 angegebenen Endprodukte. Die Styrol-Maleinsäureanhydrid-Copolymere werden entweder in Xylol oder in Methylisobutylketon hergestellt.

## Anwendungsbeispiel A

In 35 Teilen Wasser werden 0,3% (auf Trockenstoffgehalt berechnet und auf Zementgewicht bezogen) des Produktes gemäss Beispiel 1 gelöst und die erhaltene Lösung zu 100 Teilen handelsüblichen Portlandzement gegeben. Das resultierende Gemisch wird 1 Minute von Hand geknetet und anschliessend wird der Fliesswert in Funktion der Zeit nach der in "L.M. Meyer und W.F. Perenchio, Concrete International, 36-43, Januar 1979" beschriebenen Methode bestimmt und verglichen mit demjenigen eines

Zementgemisches, das unter identischen Bedingungen unter Zusatz von 0,3% (auf Trockenstoffgehalt berechnet und auf Zementgewicht bezogen) eines handelsüblichen Kondensationsproduktes von Naphthalinsulfonat und Formaldehyd anstelle des erfindungsgemässen Copolymers hergestellt worden war.
Dieser Versuch wurde unter Verwendung der Produkte von Beispielen 2-14 mit den in der Tabelle 1 angegebenen Mengen (immer auf Trockenstoffgehalt berechnet und auf Zementgewicht bezogen) wiederholt.
Es zeigte sich in allen Versuchen, dass die erfindungsgemäss hergestellten Zementmischungen ein besseres Fliessverhalten aufweisen, insbesondere wenn man die Fliesswerte in Funktion der Zeit gegenüberstellt.

## Anwendungsbeispiel B

Mit Portlandzement der Fa. Holderbank Rekingen AG (CH) und Zuschlagstoffe der Fa. SAKRET SA, Solothurn (CH) mit einem spezifischem Gewicht von 2,63 (DIN 4226, Teil 3, Ausgabe April 1983), einer Körnungsziffer k-Wert von 4,54 (Scholz, Baustoffkenntnis, 10. Auflage, Werner-Verlag, S.212) und folgender Zusammensetzung: 0-1 mm: 17,7 Kg, 1-4 mm: 11,3 Kg, 4-8 mm: 9,1 Kg, 8-16 mm: 15,0 Kg, 16-32 mm: 18,9 Kg werden unter Verwendung eines Kippmischers Betonzusammensetzungen hergestellt und deren Setzwert bestimmt nach der Prüfvorschrift ASTM C 143 (Setzmass nach Abrams). Zusatzmittel A ist ein handelsübliches Kondensationsprodukt von Naphthalinsulfonsäure und Formaldehyd, Zusatzmittel B ist das Produkt, welches gemäss Beispiel 1 nach dem Alternativverfahren hergestellt wurde. Die eingesetzten Mengen und die Ergebnisse sind in der Tabelle 2 angegeben.

**T a b e l l e 1**

| Beispiel | Maleinsäure anhydrid (Gewichtsteile) | Styrol (Gewichtsteile) | Dodecyl-mercaptan in Gew.% der Monomere | Molekulargewicht des Styrol-maleinsäureanhydrid-Copolymers | $CH_3-(OCH_2CH_2)_n-OH$ Produkt der Formel | Molekular-gewicht des Endprodukts | eingesetzte Menge in % bezogen auf Zement |
|---|---|---|---|---|---|---|---|
| 2 | 49 | 52 | - | 20.000 | IV | 73.000 | 0,2 |
| 3 | 49 | 52 | 0,25 | 10.000 | IV | 36.000 | 0,25 |
| 4 | 49 | 52 | 0,5 | 9.000 | IV | 31.500 | 0,3 |
| 5 | 49 | 52 | 1,0 | 8.700 | IV | 30.500 | 0,3 |
| 6 | 49 | 52 | 1,5 | 6.700 | IV | 23.500 | 0,38 |
| 7 | 49 | 52 | 3,5 | 4.700 | IV | 16.000 | 0,4 |
| 8 | 24,5 | 52 | 3,5 | 5.300 | IV | 14.000 | 0,37 |
| 9 | 16,3 | 52 | 3,5 | 4.800 | IV | 10.500 | 0,4 |
| 10 | 49 | 52 | 2,5 | 5.200 | V | 10.000 | 0,4 |
| 11 | 49 | 52 | 2,5 | 4.900 | VI | 12.000 | 0,38 |
| 12 | 49 | 52 | 2,5 | 5.000 | VII | 20.000 | 0,35 |
| 13 | 49 | 39 | 2,85 | 5.100 | IV | 20.000 | 0,37 |
| 14 | 49 | 26 | 3,3 | 4.500 | IV | 20.000 | 0,4 |

Tabelle 2

| Betonzusammensetzung Nr. | Zement Kg | Zuschlagstoffe Kg | Wasser Kg | Zusatzmittel Kg | Setzwert cm |
|---|---|---|---|---|---|
| 1 | 13,44 | 72,0 | 5,38 | 0,109 A | 22,4 |
| 2 | 13,44 | 72,0 | 5,38 | 0,028 B | 22,0 |
| 3 | 13,44 | 72,0 | 6,05 | 0,054 A | 22,1 |
| 4 | 13,44 | 72,0 | 6,05 | 0,021 B | 23,0 |
| 5 | 13,44 | 72,0 | 6,72 | 0,027 A | 21,3 |
| 6 | 13,44 | 72,0 | 6,72 | 0,011 B | 21,8 |

**Patentansprüche**
**Patentansprüche für folgende Vertragsstaaten : AT, BE, CH, DE, FR, GB, IT, LI, NL, SE**

**1.** Copolymere von Styrol und Maleinsäurehalbester mit einem Molekulargewicht von 9.000 bis 100.000 und einem Verhältnis von Styrol- zu Maleinsäure-(anhydrid oder -halbester)-Einheiten zwischen 3:1 und 1:3 als freie Säuren oder in Salzform, dadurch gekennzeichnet, dass die Maleinsäurehalbester-Einheiten der Formel

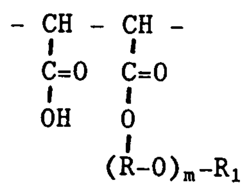

entsprechen,
worin
R einen $C_{2-6}$-Alkylenrest,
$R_1$ eine $C_{1-20}$Alkyl-, $C_{6-9}$Cycloalkyl- oder Phenylgruppe
m eine Zahl von 1 bis 100 bedeuten,
diese Einheiten zusammen n = 10 bis 100 mal im Copolymer auftreten, das Verhältnis der Anzahl Maleinsäurehalbester zu den Maleinsäureanhydrid-Einheiten von 3:1 bis 100:1 beträgt und die Summe m + n = 15-100.

**2.** Ein Copolymer gemäss Anspruch 1, worin R eine Aethylengruppe, $R_1$ Methyl, das Verhältnis der Styrol- zu den Maleinsäure(-halbester oder -anhydrid)-Einheiten 1:1, m eine Zahl 11-12 und n eine Zahl 18-25 ist.

**3.** Verfahren zur Herstellung von Copolymeren gemäss Anspruch 1, dadurch gekennzeichnet, dass man Copolymere von Styrol und Maleinsäureanhydrid, worin die Styrol- und Maleinsäure-anhydrid Einheiten n = 10 bis 100 mal auftreten, mit Polyalkylenglykoläthern der Formel

$R_1$ - O - $(R\text{-}O)_m$ - H

umsetzt und gewünschtenfalls die erhaltenen Copolymere mit einer Alkali- oder Erdalkalibase, mit Ammoniak oder mit einer (Hydroxy)-alkylaminoverbindung in die Salzform überführt.

**4.** Verfahren zur Verbesserung der Fliesswerte von Zementmischungen, bestehend aus einem hydraulischen Bindemittel, Zuschlagstoffen und Wasser, dadurch gekennzeichnet, dass man als Zusatzmittel ein Copolymer von Styrol und Maleinsäurehalbester gemäss Anspruch 1 einsetzt.

**5.** Zementmischungen bestehend aus einem hydraulischen Bindemittel, Zuschlagstoffen und Wasser, dadurch gekennzeichnet, dass sie als Zusatzmittel ein Copolymer von Styrol und Maleinsäurehalbester gemäss Anspruch 1 enthalten.

**6.** Zementmischungen gemäss Anspruch 5, dadurch gekennzeichnet, dass sie ein Copolymer gemäss Anspruch 2 enthalten.

**Patentansprüche für folgenden Vertragsstaat : ES**

**1.** Verfahren zur Herstellung von Copolymeren von Styrol und Maleinsäurehalbester mit einem Molekulargewicht von 9.000 bis 100.000 und einem Verhältnis von Styrol- zu Maleinsäure-(anhydrid oder -halbester)-Einheiten zwischen 3:1 und 1:3 als freie Säuren oder in Salzform, dadurch gekennzeichnet, dass man Copolymere von Styrol und Maleinsäureanhydrid, worin die Styrol- und Maleinsäure-anhydrid-Einheiten zusammen n = 10 bis 100 mal auftreten, mit Polyalkylenglykoläthern der Formel

$R_1$ - O - $(R\text{-}O)_m$ - H

worin
R  einen $C_{2-6}$-Alkylenrest,
$R_1$  eine $C_{1-20}$Alkyl-, $C_{6-9}$Cycloalkyl- oder Phenylgruppe,
m  eine Zahl von 1 bis 100 bedeuten,
umsetzt zu Copolymeren, worin das Verhältnis der Anzahl Maleinsäurehalbester zu den Maleinsäure-anhydrid-Einheiten von 3:1 bis 100:1 beträgt und die Summe m + n = 15-100, und gewünschtenfalls die erhaltenen Copolymere mit einer Alkali- oder Erdalkalibase, mit Ammoniak oder mit einer (Hydroxy)-alkylaminoverbindung in die Salzform überführt.

**2.** Verfahren gemäss Anspruch 1, dadurch gekennzeichnet, dass man ein Copolymer herstellt, worin R eine Aethylengruppe, $R_1$ Methyl, das Verhältnis der Styrol- zu den Maleinsäure(-halbester oder -anhydrid)-Einheiten 1:1, m eine Zahl 11-12 und n eine Zahl 18-25 ist.

**3.** Verfahren zur Verbesserung der Fliesswerte von Zementmischungen, bestehend aus einem hydraulischen Bindemittel, Zuschlagstoffen und Wasser, dadurch gekennzeichnet, dass man als Zusatzmittel 0,01 bis 10 % eines Copolymers gemäss Anspruch 1 einsetzt.

**4.** Zementmischungen bestehend aus einem hydraulischen Bindemittel, Zuschlagstoffen und Wasser, dadurch gekennzeichnet, dass sie als Zusatzmittel 0,01 bis 10 % eines Copolymers gemäss Anspruch 1 enthalten.

**5.** Zementmischungen gemäss Anspruch 4, dadurch gekennzeichnet, dass sie ein Copolymer gemäss Anspruch 2 enthalten.

**Claims**
**Claims for the following Contracting States : AT, BE, CH, DE, FR, GB, IT, LI, NL, SE**

**1.** Copolymers of styrene and maleic acid semi-esters having a molecular weight of 9,000 to 100,000 and having ratios of styrene units to maleic acid (anhydride or semi-ester) units of between 3:1 and 1:3, in free acid form or in salt form, characterized in that the maleic acid semi-ester units correspond to the formula

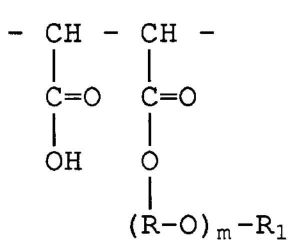

wherein
R  is a $C_{2-6}$-alkylene radical,
$R_1$  is a $C_{1-20}$alkyl, $C_{6-9}$cycloalkyl or phenyl group,
m  is a number from 1 to 100,

the combinations of these units occurring n times (where n = 10 to 100) in the copolymers, the ratio of the number of maleic acid semi-ester units to that of the maleic acid anhydride units being from 3:1 to 100:1, and the sum of m + n being 15-100.

2. A copolymer according to claim 1, wherein R is an ethylene group, $R_1$ is methyl, the ratio of styrene to maleic acid semi-esters or anhydrides is 1:1, m is a number from 11 to 12 and n is a number from 18 to 25.

3. Process for the production of copolymers according to claim 1, characterized in that copolymers of styrene and maleic acid anhydride, wherein the combination of styrene and maleic acid anhydride units occurs n times (n = 10 to 100), are reacted with polyalkylene glycol ethers of formula

$$R_1 - O - (R\text{-}O)_m - H$$

,the copolymers thus obtained being optionally converted into the salt form with an alkaline base or alkaline earth base, with ammonia or with a (hydroxy)-alkylamino compound.

4. Process for improving the fluidity of cementitious mixes consisting of a hydraulic binder, aggregate and water, characterized in that a copolymer of styrene and maleic acid semi-ester according to claim 1 is employed therein as an admixture.

5. Cementitious mixes consisting of a hydraulic binder, aggregate and water, characterized in that they contain an admixture which is a copolymer of styrene and maleic acid semi-ester according to claim 1.

6. Cementitious mixes according to claim 5, characterized in that they contain a copolymer according to claim 2.

**Claims for the following Contracting State : ES**

1. Process for the production of copolymers of styrene and maleic acid semi-esters having a molecular weight of 9,000 to 100,000 and having ratios of styrene units and maleic acid (anhydride or semi-ester) units of between 3:1 and 1:3, in free acid form or in salt form, characterized in that copolymers of styrene and maleic acid anhydride, wherein the combinations of styrene and maleic acid anhydride units occur n times (n = 10 to 100), are reacted with polyalkylene glycol ethers of formula

$$R_1 - O - (R\text{-}O)_m - H$$

wherein
R is a $C_{2-6}$-alkylene radical,
$R_1$ is a $C_{1-20}$alkyl, $C_{6-9}$cycloalkyl or phenyl group,
m is a number from 1 to 100,
to form copolymers, wherein the ratio of maleic acid semi-esters to maleic acid anhydride units is from 3:1 to 100:1, and the sum of m + n = 15-100, the copolymers obtained optionally being converted into the salt form by reaction with an alkaline base or alkaline earth base, with ammonia or with a (hydroxy)-alkylamino compound.

2. Process according to claim 1, characterized in that a copolymer is produced, in which R is an ethylene group, $R_1$ is methyl, the ratio of styrene to maleic acid semi-esters or anhydrides is 1:1, m is a number from 11 to 12 and n is a number from 18 to 25.

3. Process for improving the fluidity of cementitious mixes consisting of a hydraulic binder, aggregate and water, characterized in that 0.01 to 10 % of a copolymer according to claim 1 is employed therein as an admixture.

4. Cementitious mixes consisting of a hydraulic binder, aggregate and water, characterized in that they contain as an admixture 0.01 to 10 % of a copolymer according to claim 1.

**5.** Cementitious mixes according to claim 4, characterized in that they contain a copolymer according to claim 2.

## Revendications

**Revendications pour les Etats contractants suivants : AT, BE, CH, DE, FR, GB, IT, LI, NL, SE**

**1.** Copolymères de styrène et d'hémi-ester de l'acide maléique ayant un poids moléculaire de 9000 à 100 000 et un rapport des unités styrène aux unités anhydride ou hémi-ester de l'acide maléique compris entre 3:1 et 1:3, sous forme d'acides libres ou sous forme de sels , caractérisés en ce que les unités d'hémi-ester de l'acide maléique correspondent à la formule

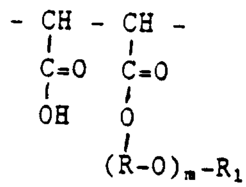

où

R signifie un reste alkylène en $C_2$-$C_6$,

$R_1$ signifie un groupe alkyle en $C_1$-$C_{20}$, cycloalkyle en $C_6$-$C_9$ ou phényle, et

m signifie un nombre de 1 à 100,

l'ensemble des unités apparaissant n fois (n = 10 à 100) dans le copolymère, le rapport des unités d'hémi-ester de l'acide maléique aux unités d'anhydride maléique étant de 3:1 à 100:1 et la somme m + n = 15-100.

**2.** Un copolymère selon la revendication 1, dans lequel R signifie un groupe éthylène, $R_1$ signifie un groupe méthyle, le rapport des unités styrène aux unités hémi-ester ou anhydride de l'acide maléique est de 1:1, m signifie un nombre de 11 à 12 et n signifie un nombre de 18 à 25.

**3.** Procédé de préparation des copolymères selon la revendication 1, caractérisé en ce qu'on fait réagir des copolymères du styrène et de l'anhydride maléique, dans lesquels l'ensemble des unités styrène et des unités anhydride maléique apparaissent n fois (n =10 à 100), avec un éther polyalkylèneglycolique de formule

$R_1$ - O - $(R\text{-}O)_m$ - H

et on transforme éventuellement les copolymères obtenus en leurs sels avec une base d'un métal alcalin ou alcalino-terreux, avec l'ammoniac ou avec un composé (hydroxy)-alkyl-amino.

**4.** Procédé d'amélioration de la fluidité des gâchées de mortier ou de béton constituées d'un liant hydraulique, de granulats et d'eau, caractérisé en ce qu'on introduit comme adjuvant un copolymère de styrène et d'hémi-ester de l'acide maléique selon la revendication 1.

**5.** Gâchées de mortier ou de béton constituées d'un liant hydraulique, de granulats et d'eau, caractérisées en ce qu'elles contiennent comme adjuvant un copolymère de styrène et d'hémi-ester de l'acide maléique selon la revendication 1.

**6.** Gâchées de mortier ou de béton selon la revendication 5, caractérisées en ce qu'elles contiennent un copolymère selon la revendication 2.

**Revendications pour l'Etat contractant suivant : ES**

**1.** Procédé de préparation de copolymères de styrène et d'hémi-ester de l'acide maléique ayant un poids moléculaire de 9000 à 100 000 et un rapport des unités styrène aux unités anhydride ou hémi-ester de l'acide maléique compris entre 3:1 et 1:3, sous forme d'acides libres ou sous forme de sels, caractérisé

en ce qu'on fait réagir des copolymères du styrène et de l' anhydride maléique dans lesquels l'ensemble des unités styrène et des unités anhydride maléique apparaissent n fois (n = 10 à 100), avec un éther polyalkylèneglycolique de formule

$R_1$ - O - (R-O)$_m$ - H

où

R signifie un reste alkylène en $C_2$-$C_6$,

$R_1$ signifie un groupe alkyle en $C_1$-$C_{20}$, cycloalkyle en $C_6$-$C_9$ ou phényle, et

m signifie un nombre de 1 à 100,

pour obtenir des copolymères dans lesquels le rapport des unités d'hémi-ester de l'acide maléique aux unités d'anhydride maléique est de 3:1 à 100:1 et la somme m + n = 15-100, et on transforme éventuellement les copolymères obtenus en sels avec une base d'un métal alcalin ou alcalino-terreux, avec l'ammoniac ou avec un composé (hydroxy)-alkylamino.

**2.** Un procédé selon la revendication 1, caractérisé en ce qu'on prépare un copolymère où R signifie un groupe éthylène, $R_1$ signifie un groupe méthyle, le rapport des unités styrène aux unités hémi-ester ou anhydride de l'acide maléique est de 1:1, m signifie un nombre de 11 à 12 et n signifie un nombre de 18 à 25.

**3.** Procédé d'amélioration de la fluidité des gâchées de mortier ou de béton constituées d'un liant hydraulique, de granulats et d'eau, caractérisé en ce qu'on introduit comme adjuvant de 0,01 à 10% d'un copolymère selon la revendication 1.

**4.** Gâchées de mortier ou de béton constituées d'un liant hydraulique, de granulats et d'eau, caractérisées en ce qu'elles contiennent comme adjuvant de 0,01 à 10% d'un copolymère selon la revendication 1.

**5.** Gâchées de mortier ou de béton selon la revendication 4, caractérisées en ce qu'elles contiennent un copolymère selon la revendication 2.